# EUROPEAN PATENT APPLICATION

(11) **EP 4 563 294 A1**
(43) Date of publication of application: **04.06.2025**
(21) Application number: 23845499.5
(22) Date of filing: 24.07.2023
(51) Int. Cl.: B25J 9/00, A61H 1/02

(54) **LIGHTWEIGHT HUMAN BODY ASSISTANCE METHOD AND DEVICE BASED ON SINGLE DRIVE ACTUATOR**

(30) Priority: 25.07.2022 CN 202210888010
(71) Applicant: Hypershell Co., Ltd., Shanghai 201208 (CN)
(72) Inventor: SUN, Kuan, Shanghai 201208 (CN); QIAO, Yingjie, Shanghai 201208 (CN)
(74) Representative: Cabinet Beau de Loménie
(86) International application number: PCT/CN2023/108891
(87) International publication number: WO 2024/022289

(57) **Abstract**

The present invention relates to a lightweight human body assistance method based on a single drive actuator, comprising: rotating mechanisms capable of driving the thighs on two sides to move forward and backward alternately relative to the crotch are respectively provided on the two sides of the hip joint of a human body; the rotating mechanisms comprise rotatable bases located on the sides of the hip joint and driving rods capable of driving the legs to swing relative to the rotatable bases; under the action of a same drive actuator, the driving rods on the two sides of the hip joint drive the thighs to swing alternately relative to the crotch. The left and right legs are controlled by a single drive actuator, so that the cost, the power consumption, and the weight are reduced, the overall assistance performance is improved, and the control is convenient. The rotatable bases are rigidly connected to the drive actuator; the drive actuator is suspended on one side of the human body; the assistance generated by the driving rods rotating relative to the rotatable bases directly acts on the two legs, so that the two legs are spread apart or held together, independent of the crotch; therefore, the crotch only needs to bear part of the weight of an assistance device, and the situations of local labor saving and global labor consuming are avoided.

## Description

### TECHNICAL FIELD

The present disclosure relates to the field of human body exoskeleton walking assistance, and particularly relates to a lightweight human body assistance method based on a single drive actuator.

### BACKGROUND

Existing assistance devices for the lower part of a human body are generally mounted on the hips or waist. In terms of power, a drive motor or a hydraulic drive is mainly adopted. In the design of the drive motor, drive devices are set on two sides of human thighs to drive the left and right legs to move alternately.

For example, an application with an application number No. CN202010364008.1 and entitled "Assistance Walking and Auxiliary Support Mechanism" includes a left leg, a right leg, feet, a waist-wearing module, and an auxiliary support telescopic rod, and a foot is mounted on each of the left leg and the right leg. Each of the left leg and the right leg includes a hip joint connector, a thigh support rod, a thigh rope drive mechanism, a knee joint connector, a lower leg support rod, a lower leg rope drive mechanism, an ankle joint connector, and a shock absorption module. The hip joint connector is connected to the waist-wearing module; and the thigh support rod and the hip joint connector are rotatably connected relative to each other.

The solution of using a drive actuator for each joint indeed provides a more flexible assistance, for example, it assists in standing up, which is beneficial for medical and industrial users. However, for tourism or outdoor activities where users need to walk or run extensively, this flexibility is unnecessary and can even become a limiting factor due to weight and cost.

Since the drive actuator is the primary factor determining the cost and weight of a human body assistance device, using two independent drive actuators means the device will be more expensive and heavier, and consume more power. Also, the device will need a larger capacity of battery to achieve the same endurance. The heavier the device, the more physical energy the human body expends, and the control difficulty is also increased.

In addition, because the assistance device is mounted on the waist or hips, when the drive actuator provides power for the thigh, the thigh outputs counteracting force to the drive actuator, and the drive actuator also inevitably applies counteracting force on the waist or hips since the drive actuator is fixed to the waist or back. So, the muscle groups of the waist or hips must bear the counteracting force.

Therefore, although it is easier for the user to lift the legs, the muscle groups of the waist and hips must exert more effort, which will cause local labor saving and overall effort.

### SUMMARY

The technical problem to be solved by the present disclosure is to address the existing problems and provide a lightweight human body assistance method based on a single drive actuator, which reduces the counteracting force applied on the waist and hips when the drive actuator provides power for the thigh.

The present disclosure provides the following technical solutions: a lightweight human body assistance method based on a single drive actuator, including a left drive mechanism for driving the left leg of a human body, a right drive mechanism for driving the right leg of the human body, and a drive actuator for delivering power to the left drive mechanism and the right drive mechanism;
wherein the drive actuator transmits torque to the left drive mechanism and transmits a counteracting force received by the left drive mechanism when driving the left leg of the human body to the right drive mechanism and the counteracting force serves as the power for the right drive mechanism to drive the right leg of the human body.

Further, a torque output end of the drive actuator is connected to the left drive mechanism and transmits the torque to the left drive mechanism, and the body of the drive actuator is fixed on the right drive mechanism and transmits the counteracting force received by the left drive mechanism when driving the left leg of the human body to the right drive mechanism and the counteracting force serves as the power for the right drive mechanism to drive the right leg of the human body.

The present disclosure further discloses a lightweight human body assistance device based on a single drive actuator, including a left drive mechanism, a right drive mechanism, and a drive actuator; wherein
the left drive mechanism includes a left rotatable base and a left drive rod that swings relative to the left rotatable base;
the right drive mechanism includes a right rotatable base and a right drive rod that swings relative to the right rotatable base; and
the drive actuator includes a left transmission cable connected to the left drive rod, a right transmission cable connected to the right drive rod, an auxiliary transmission cable connecting the left drive rod and the right drive rod, and a drive mechanism that drives the left transmission cable and the right transmission cable; and
wherein the drive mechanism pulls the left transmission cable to drive the left drive rod to swing relative to the left rotatable base; during the swinging of the left drive rod, the auxiliary transmission cable drives the right drive rod to swing in an opposite direction to the left drive rod; and
the drive mechanism pulls the right transmission cable to drive the right drive rod to swing relative to the right rotatable base; and during the swinging of the right drive rod, the auxiliary transmission cable drives the left drive rod to swing in an opposite direction to the right drive rod.

Further, the left transmission cable and the auxiliary transmission cable are arranged on two sides of a connection point of the left drive rod in the swing direction of the left drive rod; and
the right transmission cable and the auxiliary transmission cable are arranged on two sides of a connection point of the right drive rod in the swing direction of the right drive rod.

Further, the drive mechanism includes a ball screw, a sliding platform that moves reciprocally along the ball screw, and a driver that drives the ball screw to rotate; and
wherein a left side of the sliding platform is connected to the left transmission cable and a right side of the sliding platform is connected to the right transmission cable.

Further, the lightweight human body assistance device further includes a rigid support, wherein the left rotatable base and the right rotatable base are fixed on two sides of the rigid support, respectively; and the drive actuator is fixed on the rigid support.

Further, the rotatable bases are fixed to the hips by an elastic strap wrapped around the human body, and the rotatable bases include the left rotatable base and the right rotatable base.

Further, the rotatable bases are swingable relative to the elastic strap.

Further, each of the rotatable bases is connected to the elastic strap by a swivel ball joint.

Further, each of the left drive rod and the right drive rod is fixedly connected to a thigh by a flexible strap.

The present disclosure has the following beneficial effects compared to the prior art.
1. A single drive actuator is used to control the left and right legs, the force applied by the drive actuator and counteracting force received by the drive actuator are directly applied to both legs, which solves the problem of the counteracting force being applied to the waist and hips in existing devices. Compared with the existing dual-drive, one drive actuator is saved according to the present disclosure. Thus, the cost, power consumption, and weight are reduced, and the overall assistance performance is improved. Also, it is extremely convenient to control the human body assistance device.
2. The left drive rod and the right drive rod are interconnected by an auxiliary transmission cable. When one drive rod swings, the other drive rod can be driven to swing in the opposite direction.

Under this effect, when the driver drives the sliding platform to slide to the right, the sliding platform during sliding pulls the left transmission cable to drive the left drive rod to swing. At this time, the driver applies force to the left drive rod through the left transmission cable.

Regarding the counteracting force, the left drive rod transmits the counteracting force to the right drive rod through the auxiliary transmission cable, achieving the technical effect of directly applying the force applied by the drive actuator and counteracting force received by the drive actuator to both legs.

3. The rotatable bases of the drive mechanism are rigidly connected to the drive actuator, and the drive actuator is suspended on one side of the human body. The assistance force generated by the drive rods which rotate relative to the rotatable bases is directly applied to both legs, such that both legs separate and merge, independent of the hips. Therefore, the hips only need to bear part of the weight of the assistance device, which can avoid the situation where there is local effort-saving but overall effort-consuming.

### BRIEF DESCRIPTION OF DRAWINGS

FIG. 1 is a force principle diagram according to the present disclosure;
FIG. 2 is a force analysis diagram in a use state according to the present disclosure in use;
FIG. 3 is a basic structural diagram according to the present disclosure;
FIG. 4 is a schematic diagram of a human body in a use state according to the present disclosure; and
FIG. 5 is a force analysis diagram of a human body during walking.

### DETAILED DESCRIPTION

To make the objectives, technical solutions, and advantages of the present disclosure clearer, the technical solutions in the present disclosure will be described more clearly and completely below with reference to the drawings in the embodiments of the present disclosure.

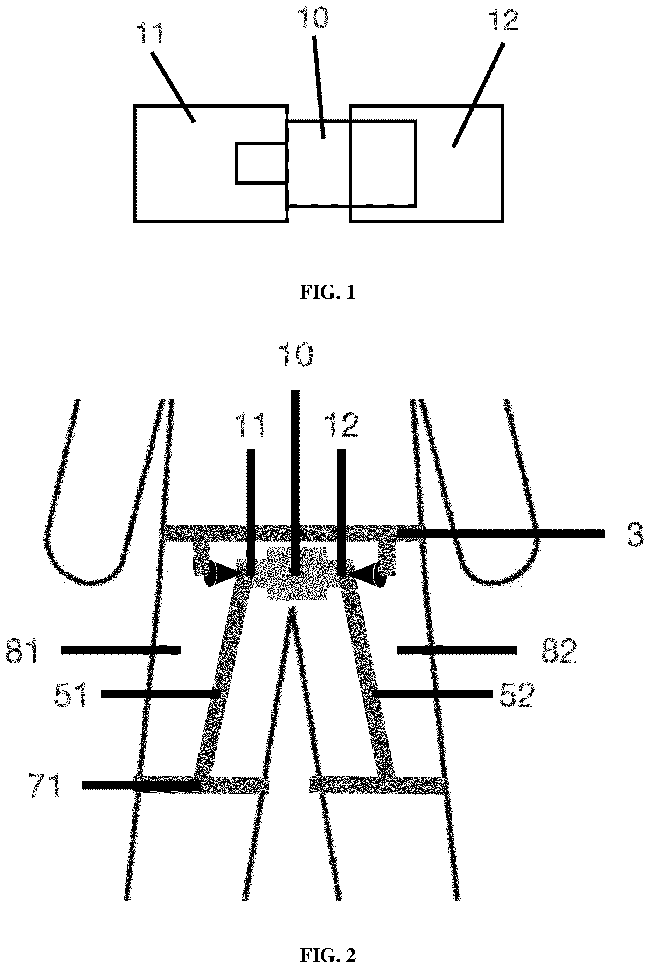

As shown in FIG. 1 and FIG. 2, the present disclosure provides a method, which includes a left drive mechanism 11 for driving a left leg of the human body, a right drive mechanism 12 for driving a right leg of the human body, and a drive actuator 10 for transmitting power to the left drive mechanism 11 and the right drive mechanism 12.

The drive actuator 10 transmits torque to the left drive mechanism 11 and transmits the counteracting force received by the left drive mechanism 11 when driving the left leg of the human body to the right drive mechanism 12 and the counteracting force serves as the power for the right drive mechanism 12 to drive the right leg of the human body.

A torque output end of the drive actuator 10 is connected to the left drive mechanism 11 to transmit torque to the left drive mechanism 11, and the body of the drive actuator 10 is fixed on the right drive mechanism 12 to transmit the counteracting force received by the left drive mechanism 11 when driving the left leg of the human body to the right drive mechanism 12 and the counteracting force serves as the power for the right drive mechanism 12 to drive the right leg of the human body.

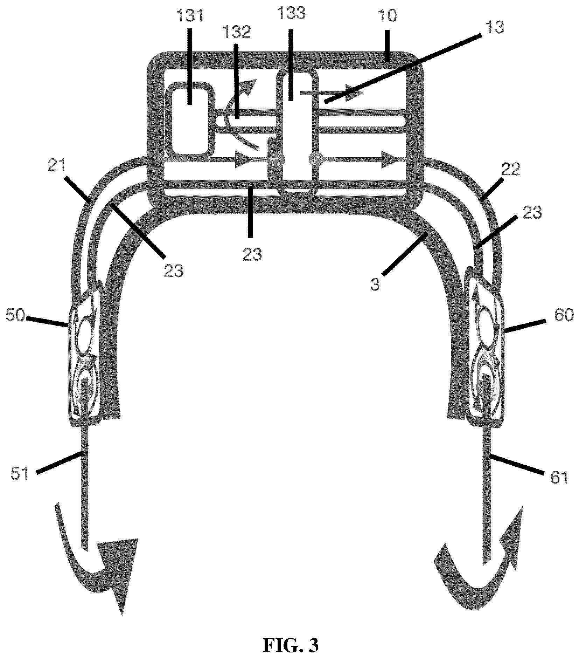

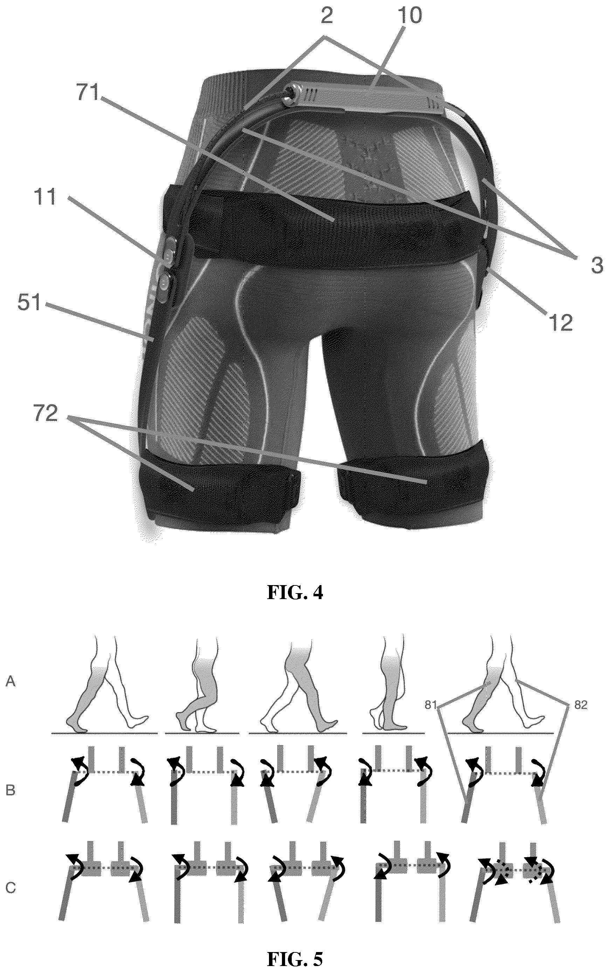

As shown in FIG. 3 and FIG. 4, the present disclosure further discloses a lightweight human body assistance device based on a single drive actuator, the device includes a left drive mechanism 11, a right drive mechanism 12, and a rigid support 3. A left rotatable base 50 and a right rotatable base 60 are fixed on two sides of the rigid support 3, respectively, and the drive actuator 10 is fixed on the rigid support 3.

The left drive mechanism 11 includes a left rotatable base 50 and a left drive rod 51 that swings relative to the left rotatable base 50.

The right drive mechanism 12 includes a right rotatable base 60 and a right drive rod 61 that swings relative to the right rotatable base 60.

The drive actuator 10 includes a left transmission cable 21 connected to the left drive rod 51, a right transmission cable 22 connected to the right drive rod 61, an auxiliary transmission cable 23 connecting the left drive rod 51 and the right drive rod 61, and a drive mechanism 13 that drives the left transmission cable 21 and the right transmission cable 22.

The left transmission cable 21 and the auxiliary transmission cable 23 are arranged on two sides of a connection point of the left drive rod 51 in the swing direction of the left drive rod 51.

The right transmission cable 22 and the auxiliary transmission cable 23 are arranged on two sides of a connection point of the right drive rod 61 in the swing direction of the right drive rod 61.

The drive mechanism 13 pulls the left transmission cable 21 to drive the left drive rod 51 to swing relative to the left rotatable base 50; and during the swinging of the left drive rod 51, the auxiliary transmission cable 23 drives the right drive rod 61 to swing in an opposite direction to the left drive rod 51.

The drive mechanism 10 pulls the right transmission cable 22 to drive the right drive rod 61 to swing relative to the right rotatable base 60; and during the swinging of the right drive rod 61, the auxiliary transmission cable 23 drives the left drive rod 51 to swing in an opposite direction to the right drive rod 61.

The drive mechanism 13 includes a ball screw 132, a sliding platform 133 that moves reciprocally along the ball screw 132, and a driver 131 that drives the ball screw 132 to rotate.

The left side of the sliding platform 133 is connected to the left transmission cable 21, and the right side of the sliding platform 133 is connected to the right transmission cable 22.

Rotatable bases are fixed to the hip by an elastic strap 71 wrapped around the human body, and the rotatable bases include the left rotatable base 50 and the right rotatable base 60. Each of the rotatable bases is connected to the elastic strap 71 through a swivel ball joint, and each of the rotatable bases is rotatable relative to the elastic strap 71, such that the human body can squat freely after wearing the device. That is, in the squatting process, the elastic strap 71 keeps stationary relative to the human body, and the each of the rotatable bases rotates relative to the elastic strap 71.

The left drive rod 51 and the right drive rod 61 are fixedly connected to thighs by a flexible strap 6.

As shown in FIG. 5A and FIG. 5B, during normal walking, the human body can walk by applying rotating torque to the left thigh 91 and the right thigh 92 through muscle contraction and relaxation.

As shown in FIG. 5C, traditional exoskeletons achieve assistance by two drive controllers mounted on both sides.

Specifically, in an existing device as shown in FIG. 5C, a power output mechanism that provides rotating force by gears, shaft transmission or the like is fixed to the back or waist, and the leg drive rod connected to the thigh rotates around the power output mechanism so as to realize walking. The leg drive rod applies rotating torque to the human leg to achieve walking, but a counteracting torque will be applied on the power output mechanism, which is then applied to the back or waist.

Compared to the prior art, the present disclosure uses a single drive controller to drive the left drive mechanism and the right drive mechanism. The left drive rod and the right drive rod are interconnected by an auxiliary transmission cable 23, and when one drive rod swings, it can drive the other drive rod to swing in the opposite direction.

Under this effect, when the driver 131 drives the sliding platform to slide to the right, the sliding platform which is sliding pulls the left transmission cable to drive the left drive rod 51 to swing. At this time, the driver 131 applies force to the left drive rod 51 through the left transmission cable 21.

Regarding the counteracting force, the left drive rod 51 transmits the counteracting force to the right drive rod 61 by the auxiliary transmission cable 23, achieving the technical effect of directly applying the force applied by the drive actuator and counteracting force received by the drive actuator to both legs.

In the present disclosure, the human body's intention to apply force can also be obtained through a force intention sensor, e.g., a force sensor. The mode of the force intention sensor is recognized through a central processor using a mathematical model and the human body's intention is converted into a drive signal for a motor. The drive signal is then transmitted to the thigh through a mechanical structure to provide assistance.

The present disclosure has the advantages of low cost and stable structure. According to this method, a single drive actuator is used to control the left and right legs, which reduces the costs, power consumption, and weight, and improves the overall assistance performance. Also, it is extremely convenient to control the device. Secondly, the rotatable bases are rigidly connected to the drive actuator 1, and the drive actuator 1 is suspended on one side of the human body. The assistance force generated by the drive rod 5 rotating relative to the rotatable base is directly applied to both legs, such that both legs separate and merge, independent of the hips. Therefore, the hips only need to bear part of the weight of the assistance device, avoiding the situation where there is local effort-saving but overall effort-consuming.

The specific implementations are merely intended to describe the technical ides and structural features of the present disclosure, with the purposes of assisting those familiar with this technology in implementing the technology based on the present disclosure. However, the contents described above are not intended to limit the protection scope of the present disclosure, and any equivalent variations and modifications made based on the spirit of the present disclosure shall fall within the protection of the present disclosure.

## Claims

1. A lightweight human body assistance method based on a single drive actuator, comprising: a left drive mechanism (11) for driving a left leg of the human body, a right drive mechanism (12) for driving a right leg of the human body, and a drive actuator (10) for transmitting power to the left drive mechanism (11) and the right drive mechanism (12);
wherein the drive actuator (10) transmits torque to the left drive mechanism (11) and transmits a counteracting force received by the left drive mechanism (11) when driving the left leg of the human body to the right drive mechanism (12) and the counteracting force serves as power for the right drive mechanism (12) to drive the right leg of the human body.

2. The lightweight human body assistance method based on a single drive actuator according to claim 1, wherein a torque output end of the drive actuator (10) is connected to the left drive mechanism (11) to transmit torque to the left drive mechanism (11), and a body of the drive actuator (10) is fixed on the right drive mechanism (12) to transmit the counteracting force received by the left drive mechanism (11) when driving the left leg of the human body to the right drive mechanism (12) and the counteracting force serves as the power for the right drive mechanism (12) to drive the right leg of the human body.

3. A lightweight human body assistance device based on a single drive actuator, comprising: a left drive mechanism (11), a right drive mechanism (12), and a drive actuator (10); wherein
the left drive mechanism (11) comprises a left rotatable base (50) and a left drive rod (51) that swings relative to the left rotatable base (50);
the right drive mechanism (12) comprises a right rotatable base (60) and a right drive rod (61) that swings relative to the right rotatable base (60);
the drive actuator (10) comprises a left transmission cable (21) connected to the left drive rod (51), a right transmission cable (22) connected to the right drive rod (61), an auxiliary transmission cable (23) connecting the left drive rod (51) and the right drive rod (61), and a drive mechanism (13) that drives the left transmission cable (21) and the right transmission cable (22); and
wherein the drive mechanism (13) pulls the left transmission cable (21) to drive the left drive rod (51) to swing relative to the left rotatable base (50); and during swinging of the left drive rod (51), the auxiliary transmission cable (23) drives the right drive rod (61) to swing in an opposite direction to the left drive rod (51); and
the drive mechanism (10) pulls the right transmission cable (22) to drive the right drive rod (61) to swing relative to the right rotatable base (60); and during swinging of the right drive rod (61), the auxiliary transmission cable (23) drives the left drive rod (51) to swing in an opposite direction to the right drive rod (61) .

4. The lightweight human body assistance method based on a single drive actuator according to claim 3, wherein
the left transmission cable (21) and the auxiliary transmission cable (23) are arranged on two sides of a connection point of the left drive rod (51) in a swing direction of the left drive rod (51); and
the right transmission cable (22) and the auxiliary transmission cable (23) are arranged on two sides of a connection point of the right drive rod (61) in a swing direction of the right drive rod (61).

5. The lightweight human body assistance method based on a single drive actuator according to claim 3 or 4, wherein the drive mechanism (13) comprises a ball screw (132), a sliding platform (133) that moves reciprocally along the ball screw (132), and a driver (131) that drives the ball screw (132) to rotate; and
wherein a left side of the sliding platform (133) is connected to the left transmission cable (21), and a right side of the sliding platform (133) is connected to the right transmission cable (22).

6. The lightweight human body assistance method based on a single drive actuator according to claim 5, further comprising a rigid support (3), wherein the left rotatable base (50) and the right rotatable base (60) are fixed on two sides of the rigid support (3), respectively; and the drive actuator (10) is fixed on the rigid support (3).

7. The lightweight human body assistance method based on a single drive actuator according to claim 3 or 6, wherein rotatable bases are fixed to hips by an elastic strap (71) wrapped around the human body, and the rotatable bases comprise the left rotatable base (50) and the right rotatable base (60).

8. The lightweight human body assistance method based on a single drive actuator according to claim 7, wherein the rotatable bases are swingable relative to the elastic strap (71).

9. The lightweight human assistance body method based on a single drive actuator according to claim 8, wherein each of the rotatable bases is connected to the elastic strap (71) through a swivel ball joint.

10. The lightweight human body assistance method based on a single drive actuator according to claim 3, 6 or 8, wherein each of the left drive rod (51) and the right drive rod (61) is fixedly connected to a thigh by a flexible strap (6).
